# EUROPEAN PATENT APPLICATION

(11) **EP 4 620 870 A1**
(43) Date of publication of application: **24.09.2025**
(21) Application number: 23890359.5
(22) Date of filing: 04.09.2023
(51) Int. Cl.: B65G 35/00, B66F 9/07

(54) **TRANSFER ROBOT**

(30) Priority: 15.11.2022 CN 202223040634 U
(71) Applicant: Hangzhou Hikrobot Co., Ltd., Hangzhou, Zhejiang 310051 (CN)
(72) Inventor: WU, Yonghai, Hangzhou, Zhejiang 310051 (CN); LI, Linxiao, Hangzhou, Zhejiang 310051 (CN); BAI, Han, Hangzhou, Zhejiang 310051 (CN); GUO, Kaiwen, Hangzhou, Zhejiang 310051 (CN)
(74) Representative: Michalski Hüttermann & Partner Patentanwälte mbB
(86) International application number: PCT/CN2023/116654
(87) International publication number: WO 2024/103922

(57) **Abstract**

The present disclosure provides a transfer robot, comprising: a body, the body being U-shaped and used for carrying goods to a specified position; a lifting/lowering assembly arranged in an opening of the U-shaped body and used for lifting or lowering the goods; and a bottom detection sensor arranged at the bottom of the lifting/lowering assembly and used for collecting navigation information used by the body to determine a walking route from the ground.

## Description

### CROSS-REFERENCE OF RELATED APPLICATIONS

This application claims priority to Chinese Patent Application No. 202223040634.9 filed on November 15, 2022, the entire content of which is incorporated herein by reference.

### TECHNICAL FIELD

The present disclosure relates to the field of mobile robots, and in particular to a transfer robot.

### BACKGROUND

With the development of information technology and industrial automation technology, a variety of transfer robots have begun to participate in the field of industrial transfer in order to replace human in completing a variety of goods transfer tasks, such that the heavy physical labor of human is reduced. The transfer robot needs to determine the position relationship between itself and the environment in time to ensure the accuracy of the movement route during the process of transfer.

In the related art, a technology similar to a quick response (QR) code navigation can usually be used to determine the movement route. However, for a transfer robot with a U-shaped body, in the conventional technology, a sensor for collecting navigation information is installed at an edge of the body or at the bottom of the body, which results in a reduction in the efficiency of collecting the corresponding navigation information and an increase in the time required for determining the movement route, and the overall transfer efficiency of the transfer robot is affected.

### SUMMARY

The present disclosure provides a transfer robot to improve the deficiencies in the related art.

The present disclosure provides a transfer robot. The transfer robot includes: a body having a U-shape and configured to carry one or more objects to a designated location; a lifting assembly provided in an opening of the body having the U-shape and configured to lift or lower the one or more objects; and a bottom detection sensor provided on a bottom part of the lifting assembly and configured to collect navigation information from a ground for the body to determine a movement route.

In an embodiment, the bottom detection sensor is an image sensor.

In an embodiment, the body includes driving wheels and a driving module, and the driving module is configured to receive the navigation information and drive the driving wheels to move along the movement route.

In an embodiment, the transfer robot further includes a top detection sensor, which is provided on a top part of the lifting assembly and configured to detect a relative position relationship between the lifting assembly and the one or more objects.

In an embodiment, the top detection sensor is one of an image sensor, an ultrasonic sensor and a photoelectric sensor.

In an embodiment, the transfer robot further includes a front-end obstacle avoidance module, which is provided at a front end of the lifting assembly and configured to detect obstacles in front of the transfer robot.

In an embodiment, the front-end obstacle avoidance module includes a non-contact detection sensor which is configured to detect obstacles within a preset range; and/or the front-end obstacle avoidance module includes a collision protection plate, an elastic reset component, a triggering assembly and a contact detection sensor; where the collision protection plate is connected to the triggering assembly by the elastic reset component, the collision protection plate applies a thrust force to the elastic reset component and the triggering assembly in a collision with an obstacle and completes a reset under an action of the elastic reset component, and the triggering assembly triggers the contact detection sensor to generate a collision signal through the thrust force.

In an embodiment, the front-end obstacle avoidance module is fixed to the front end of the lifting assembly by a module connecting component, the triggering assembly includes a guide connection plate and a contact detection sensor triggering plate connected to the guide connection plate, the collision protection plate is connected to the guide connection plate by the elastic reset component, the guide connection plate slides forward and backward by passing through an inner hole of the module connecting component, and the contact detection sensor is fixedly connected to the module connecting component.

In an embodiment, the transfer robot further includes a moving part, which is configured to drive the lifting assembly to extend from the opening of the body or retract from an outside of the body into the opening.

In an embodiment, the transfer robot further includes a slide rail assembly, which is provided between the body and the lifting assembly, and configured to guide the moving part to drive the lifting assembly to extend from or retract into the opening of the body.

In an embodiment, the transfer robot further includes an object protection unit, which is provided on a top part of the body and configured to limit the one or more objects carried by the body, where edges of the object protection unit not corresponding to the opening of the body have fences, or all edges of the object protection unit have fences, and an fence at an edge of the object protection unit corresponding to the opening of the body are lower than fences at other edges of the object protection unit.

It is to be understood that the above general descriptions and the below detailed descriptions are merely exemplary and explanatory, and are not intended to limit the present disclosure.

### BRIEF DESCRIPTION OF THE DRAWINGS

In order to more clearly explain the embodiments of the present disclosure or the technical solutions in the prior art, the drawings used in the embodiments or the description of the prior art will be briefly described below. The drawings in the following description are merely some of the embodiments described in the embodiments of the present disclosure. For those of ordinary skill in the art, other drawings can be obtained based on these drawings.
FIG. 1 is a schematic structural diagram illustrating a transfer robot according to an embodiment of the present disclosure.
FIGS. 2a to 2b are schematic structural diagrams illustrating a lifting assembly according to an embodiment of the present disclosure.
FIGS. 3a to 3b are schematic structural diagrams illustrating a front-end obstacle avoidance module according to an embodiment of the present disclosure.
FIGS. 4a to 4d are schematic structural diagrams illustrating a front-end obstacle avoidance module according to an embodiment of the present disclosure.
FIGS. 5a to 5e are flowcharts illustrating a process of carrying objects by the transfer robot based on an object protection unit according to an embodiment of the present disclosure.

### DETAILED DESCRIPTION OF THE EMBODIMENTS

Examples will be described in detail herein, with the illustrations thereof represented in the drawings. Where the following description relates to the drawings, unless otherwise indicated, the same numerals in different drawings represent the same or similar elements. The embodiments described in the following exemplary embodiments do not represent all embodiments consistent with the present disclosure. Instead, they are merely examples of device and methods consistent with certain aspects of the present disclosure.

The terminology used herein is for the purpose of describing particular embodiments only and is not intended to be limiting of the present disclosure. As used herein, the singular forms "a", "said" and "the" are intended to include the plural forms as well, unless the context clearly indicates otherwise. It will also be understood that as used herein, the term "and/or" is and includes any or all combinations of one or more of the associated listed items.

It will be understood that while terms such as "first", "second", "third", etc. may be used to describe to describe various information, such information should not be limited to these terms. These terms are used only to distinguish the same type of information from each other. For example, without departing from the scope of the present disclosure, a first information may also be referred to as a second information, and similarly, a second information may also be referred to as a first information. Depending on the context, as used herein, the wording "if" may be interpreted as "while ..." or "when ..." or "in response to a determination".

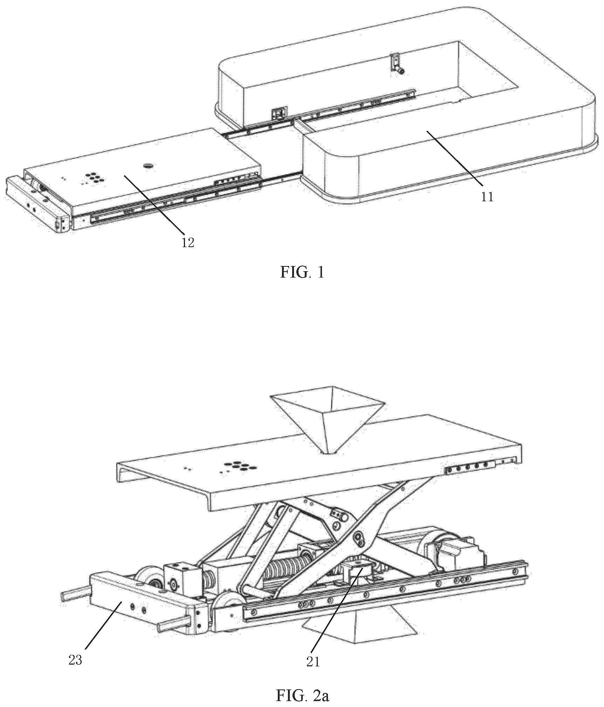

FIG. 1 is a schematic structural diagram illustrating a transfer robot according to an embodiment of the present disclosure. As shown in FIG. 1, the transfer robot includes a body 11 and a lifting assembly 12.

The body 11 is U-shaped and has a platform at a top of the body which can be configured to carry one or more objects (for example, goods). During the operation of the transfer robot, the body 11 can move to a corresponding loading location, and cooperate with the lifting assembly to load the corresponding the object, the subsequent unloading operation is thus ensured.

The lifting assembly 12 is provided in an opening of the body 11 having the U-shape, and the lifting assembly 12 includes a mechanical structure that supports lifting and lowering capabilities for lifting or lowering object. The lifting assembly in a falling state has a lower height and can flexibly enter the gap between the bottom of the object and the ground. The lifting assembly in a rising state has a height greater than the body 11 and can carry the object and transfer the carried object to the platform at the top of the body 11. The present disclosure do not limit methods for driving the lifting assembly, and the lifting assembly 12 may perform transition between the falling state and the rising state based on a hydraulic, a electric power and the like.

Obviously, the design of the single lifting assembly and the U-shaped body effectively compresses the volume and the manufacturing cost of the transfer robot, expands the application scenarios and enhances the commercial value. In addition, the body may be provided with driving wheels and a driving module, where the driving module may be configured to receive the navigation information and drive the driving wheels to move along the movement route, therefore it is ensured that the transfer robot can move in the process of carrying the object.

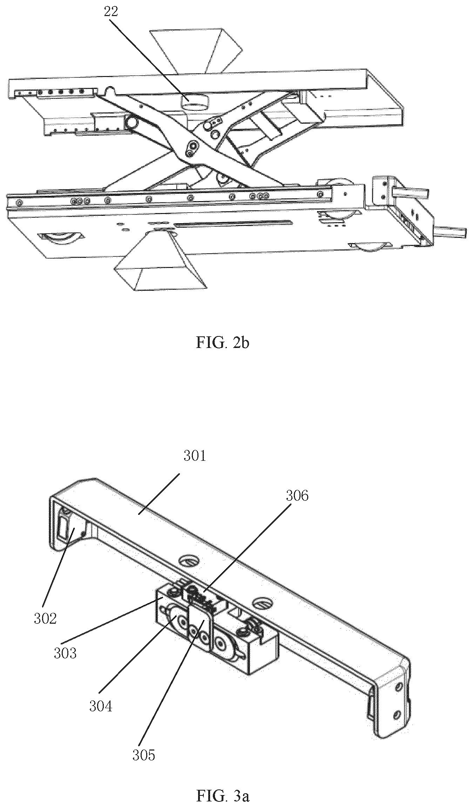

The structure of the lifting assembly is described below in conjunction with FIGS. 2a and 2b, respectively, from different viewpoints. As shown in FIG. 2a, FIG. 2a is a top view illustrating the lifting assembly in the rising state, where the transfer robot further includes a bottom detection sensor 21.

The bottom detection sensor 21 may be provided on the bottom part of the lifting assembly 12. During the operation of the transfer robot, the bottom detection sensor 21 may be used to collect the navigation information from the ground for the body to determine the movement route. The bottom detection sensor 21 may be an image sensor similar to an optical camera, and the present disclosure is not limited thereto. In addition, the navigation information is represented based on images that can be recognized by the image sensor, such as QR codes and barcodes. For example, if a QR code sticker carrying navigation information is placed on the ground, an optical camera can be used as a bottom detection sensor to capture the bottom QR code image when the lifting assembly of the transfer robot passes through the QR code sticker, and corresponding navigation information can be obtained. Those skilled in the art will be understood, in the case where the lifting assembly 12 moves toward the opening, compared to providing the detection sensor on the bottom part of the body, the detection sensor provided on the bottom part of the lifting assembly can capture the navigation information on the ground earlier, such that the efficiency of the body in determining the corresponding movement route is improved. Since the "opening" is close to the center of the body having the U-shape, the body does not need to take up much space for rotation (i.e., rotation around the center) when the navigation information requires the body to change the moving direction in place, therefore the efficiency of movement of the body is improved. The body can also adjust its pose based on the specific image collected by the bottom detection sensor. Illustrated by the example of the QR code, when the QR code image captured by the bottom detection sensor only contains a part of the content, the body can try to perform operations such as forward, backward, or rotation to make the bottom detection sensor 21 capture the complete QR code image.

The navigation information can be represented as relevant information of partial or complete routes in the movement route (such as destination coordinates and current coordinates, or a set of specific directions and corresponding movement distances, etc.), or as loading and unloading location information of a corresponding object in the movement route. The present disclosure does not limit the meaning or actual parameters represented by the navigation information.

In the technical solution provided in the present disclosure, the bottom detection sensor is provided on the bottom part of the lifting assembly of the transfer robot, so that the U-shaped body can determine the movement route based on the navigation information collected by the bottom detection sensor during the process of carrying the object. Since the lifting assembly is provided in the opening of the U-shaped body, the bottom detection sensor can timely and accurately obtain the navigation information, such that the transfer robot can efficiently determine the movement route, and overall transfer efficiency is improved.

As shown in FIG. 2b, FIG. 2b is a bottom view illustrating the lifting assembly in the rising state, where the transfer robot further includes a top detection sensor 22. The top detection sensor 22 can be provided on a top part of the lifting assembly and configured to detect a relative position relationship between the lifting assembly and the one or more objects. The relative position relationship can be expressed as whether the object is located above the lifting assembly 12. In the actual application scenario, if it is stipulated that all the objects (for example, goods) are placed on the shelf, the relative position relationship can be expressed as whether the shelf is located above the lifting assembly 12, and if so, the lifting assembly 12 can lift the shelf to carry the corresponding objects. If not, it means that there is no corresponding object in the current position, and the body 11 can inform the administrator of this situation in time while keeping the falling state, and continue to go to the next loading location, or search within a certain preset range. Of course, according to the actual needs of users (such as detection accuracy and device budget cost), the top detection sensor can be one of devices such as an image sensor, an ultrasonic sensor and a photoelectric sensor, which is not limited in the present disclosure.

The transfer robot, when moving on the movement route, can detect obstacles in the movement route and avoid them in time.

In an embodiment, the transfer robot may include a front-end obstacle avoidance module 23, which is provided at the front end of the lifting assembly (similar to the position of the front-end obstacle avoidance module 23 in FIG. 2a) to detect obstacles in front of the transfer robot. According to the different principles involved in detecting the obstacles, the front-end obstacle avoidance module 23 can realize the corresponding obstacle avoidance capability based on a non-contact detection sensor or a contact detection sensor or a combination thereof.

The front-end obstacle avoidance module 23 can include a non-contact detection sensor 302 which is configured to detect obstacles within a preset range. Illustrated by the example of FIG. 3a, the non-contact detection sensors 302 in FIG. 3a are arranged on both sides of the front-end obstacle avoidance module 23. When the non-contact detection sensors 302 detect an obstacle in the movement route that will contact the front-end obstacle avoidance module, the transfer robot can perform operations such as bypassing, waiting in place and returning according to preset obstacle avoidance rules. Similar to the top detection sensor 22, the non-contact detection sensor 302 can be one of the devices such as an image sensor, an ultrasonic sensor, and a photoelectric sensor, which is not limited in the present disclosure.

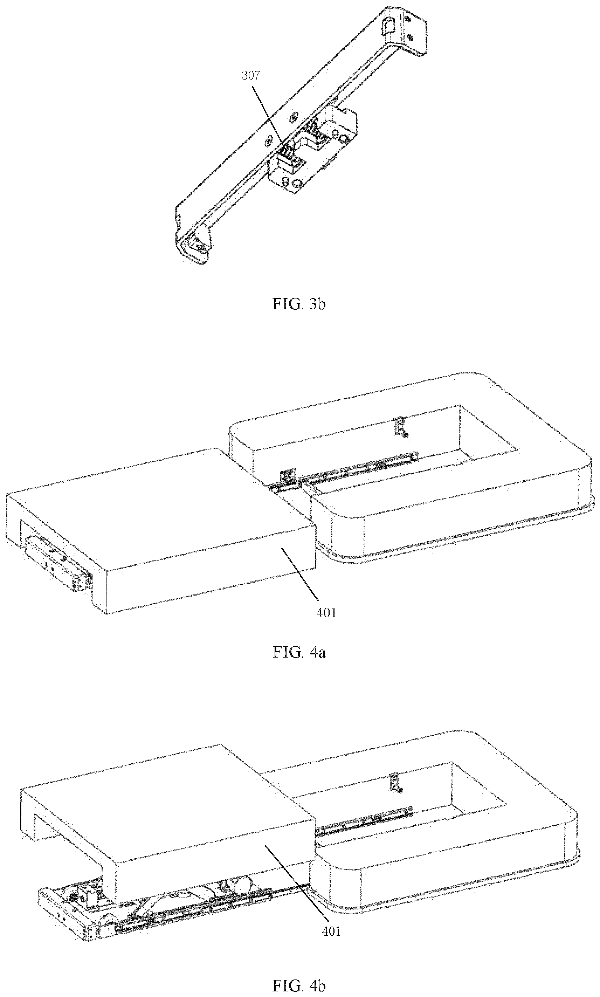

The front-end obstacle avoidance module 23 may include a collision protection plate 301, an elastic reset component 307, a triggering assembly and a contact detection sensor 306. The collision protection plate 301 is connected to the triggering assembly by the elastic reset component 307. The collision protection plate 301 can apply a thrust force to the elastic reset component 307 and the triggering assembly in a collision with an obstacle and completes a reset under an action of the elastic reset component 307, and the triggering assembly triggers the contact detection sensor to generate a collision signal through the thrust force. Illustrated by the example of FIGS. 3a and 3b, the front-end obstacle avoidance module 23 can be fixed to the front end of the lifting assembly through a module connecting component 303. The triggering assembly may include a guide connection plate 304 and a contact detection sensor triggering plate 305. The collision protection plate 301 can be connected to the guide connection plate 304 through the elastic reset component 307. The guide connection plate 304 can slide forward and backward by passing through an inner hole of the module connecting component 303. The contact detection sensor triggering plate 305 is fixedly connected to the guide connection plate 304 (which can be regarded as the triggering assembly as a whole). The contact detection sensor 306 is fixedly connected to the module connecting component 303. When there is an obstacle in front of the collision protection plate 301, the collision protection plate 301 pushes the guide connection plate 304 to move backward. At this time, the contact detection sensor triggering plate 305 fixed on the guide connection plate 304 triggers the contact detection sensor 306 to generate a collision signal, and then the transfer robot can perform operations such as bypassing, waiting in place and returning according to the preset obstacle avoidance rules. The contact detection sensor 306 can serve as a trigger switch to respond to the collision of the triggering assembly.

Of course, the front-end obstacle avoidance module can realize the corresponding obstacle avoidance capability based on the non-contact detection sensor and the contact detection sensor at the same time, and both of them are configured to detect obstacles at the same time, thus the failure of obstacle avoidance capability caused by the failure of either sensor is avoided, and the safety of objects during transfer is improved.

The transfer robot can include a moving part, which is configured to drive the lifting assembly 12 to extend from the opening of the body or retract from an outside of the body into the opening. A slide rail assembly is provided between the body and the lifting assembly and configured to guide the moving part to drive the lifting assembly 12 to extend from or retract into the opening of the body 11. Therefore, the maximum extension range of the lifting assembly can be regarded as the maximum movable range of the moving part on the slide rail assembly.

Hereinafter, the process of loading objects at the loading location by the lifting assembly of the transfer robot will be described in detail with reference to FIGS. 4a to 4d.

At step 1, the lifting assembly extends out of the body. As shown in FIG. 4a, the transfer robot drives the lifting assembly by the moving part to extend out of the body from the opening along the slide rail assembly, so that the lifting assembly extends into a gap between a bottom of a first shelf 401 loaded with objects and the ground.

At step 2, the lifting assembly rises. As shown in FIG. 4b, the lifting assembly changes from the falling state to the rising state, so that the first shelf 401 is lifted by the lifting assembly.

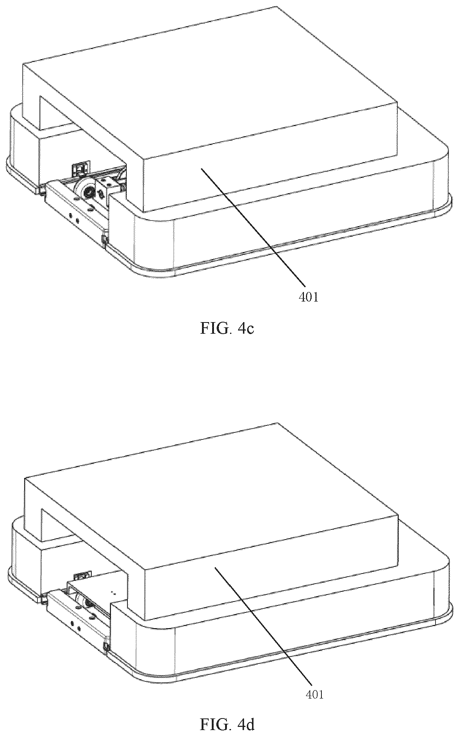

At step 3, the lifting assembly retracts into the opening of the body. As shown in FIG. 4c, the transfer robot drives the lifting assembly by the moving part to retract from the outside of the body along the slide rail assembly into the opening, so that the first shelf 401 is located above the body.

At step 4, the lifting assembly falls. As shown in FIG. 4d, the lifting assembly changes from the rising state to the falling state, so that the bottom part of the first shelf 401 contacts with the top part of the body, thus the whole process of transferring the first shelf 401 from the ground to the body is completed.

It is to be understood that the process of unloading the shelf by the transfer robot is equivalent to the reverse process of loading the shelf, which can be described according to the sequence of FIG. 4d to FIG. 4a, so the present disclosure will not be repeated herein.

The above-mentioned transfer mode is applicable to conventional fixed shelf, and the transfer robot in the present disclosure also supports transferring a movable shelf configured with similar auxiliary wheel devices.

In an embodiment, the transfer robot can further include an object protection unit 501, which is provided on the top part of the body 11 and configured to limit the one or more objects carried by the body 11. Edges of the object protection unit 501 not corresponding to the opening of the body have fences, or all edges of the object protection unit 501 have fences, and an fence at an edge of the object protection unit corresponding to the opening of the body are lower than fences at other edges of the object protection unit. The fences at other edges (edges not corresponding to the opening) ensures that the objects still maintain their original posture after being transferred above the body, and the fence corresponding to the opening can ensure that the bottom of the objects will not fall out of the body from the opening direction after contacting the body.

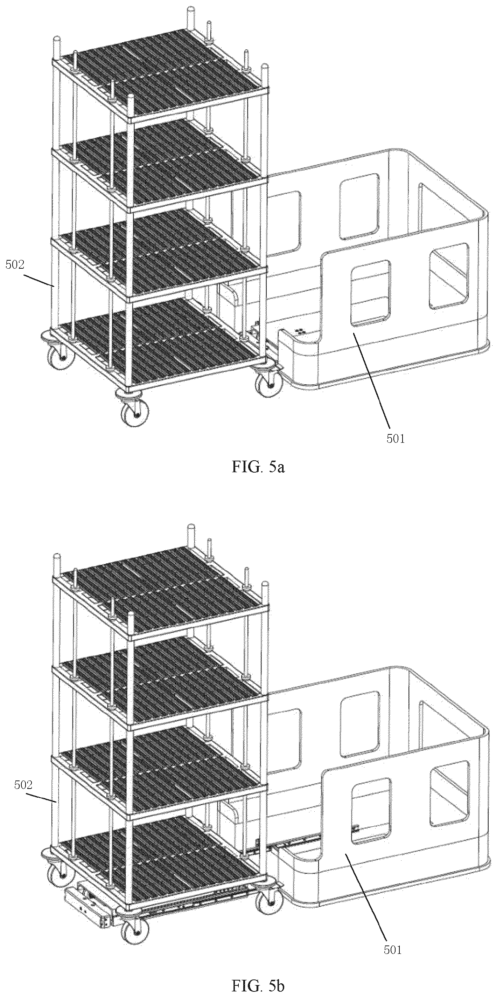

The process of loading the movable shelf by the transfer robot is described in detail below in conjunction with FIGS. 5a to 5e.

At step 1, the transfer robot arrives at a transfer location. As shown in FIG. 5a, for example, the body of the transfer robot determines the movement route based on the navigation information collected by the bottom detection sensor and moves to a front of a second shelf 502.

At step 2, the lifting assembly extends.

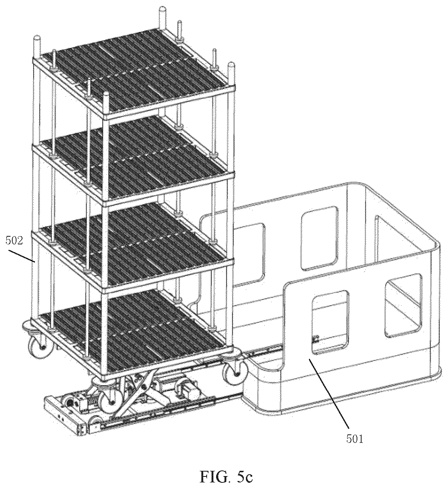

At step 3, the lifting assembly rises. Since FIGS. 5b and 5c corresponding to steps 2 and 3 are essentially identical to the process described with respect to FIGS. 4a and 4b, which will not be repeated.

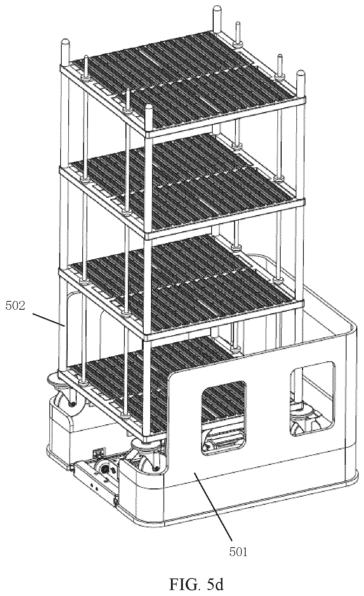

At step 4, the lifting assembly retracts into the body. As shown in FIG.5d, the transfer robot drives the lifting assembly by the moving part to retract from the outside of the body along the slide rail assembly into the opening, so that the object protection unit 501 is located above the body. The edge of the object protection unit 501 corresponding to the opening has a fence with a height slightly lower than that of the lifting assembly in the rising state, thus the second shelf 502 can smoothly enter an internal area surrounded by the fences of the object protection unit 501. Because other edges (edges not corresponding to the opening) have fences with higher height, the second shelf 502 can still maintain the posture corresponding to the internal area during the movement of the lifting assembly.

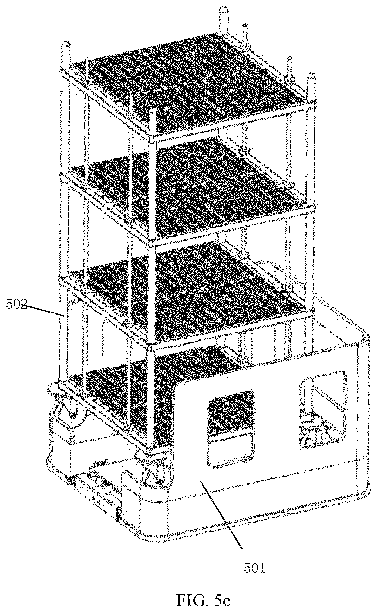

At step 5, the lifting assembly falls. As shown in FIG. 5e, the lifting assembly changes from the rising state to the falling state, so that the bottom part of the second shelf 502 contacts with the top part of the body. When the lifting assembly and the second shelf 502 are completely separated, the second shelf 502 is fixed in the internal area under the limit protection of the object protection unit 501, so that the transfer robot can carry the second shelf 502 to a corresponding unloading location.

As can be seen from the embodiments, the transfer robot of the present disclosure adopts the design of the U-shaped body with the corresponding lifting assembly, which reduces the overall volume and improves the flexibility of the device when moving, and the bottom detection sensor located on the bottom part of the lifting assembly can timely and accurately collect the navigation information, which ensures that the body efficiently determines the movement route. The transfer robot can implement more targeted strategies in the absence of objects by means of detecting the relative position relationship between the lifting assembly and the object through the top detection sensor. In addition, the introduction of the front-end obstacle avoidance module and the object protection unit ensures the safety of objects in the process of transfer in different aspects.

By the characteristic that both the body and the lifting assembly can carry an object, the effect of carrying multiple objects at the same time is realized, and the overall transfer efficiency is improved. Also, a sensor such as an object pose detection sensor, an object detection sensor, and a quality sensor can be introduced to improve the transfer logic of the transfer robot, thereby the time required to load different objects is optimized, and the transfer efficiency of objects is improved.

For details about the implementation process of the functions and effects of the units in the above apparatus, reference can be made to the implementation process of the corresponding steps in the above method, details of which will not be repeated herein.

Since the embodiments of the apparatus substantially corresponds to the embodiments of the method, relevant parts may be referred to the description of the embodiments of the method. The examples of apparatuses described above are merely illustrative and the units described as separate components may be or not be physically separated, and the components displayed as units may be or not be physical units, i.e., may be located in one place, or may be distributed to a plurality of network units. Some or all of these modules can be selected according to actual needs to achieve the purpose of the solution of the present disclosure. It may be understood and implemented by those skilled in the art without creative work.

While the present disclosure includes many specific embodiment details, these should not be interpreted as limiting the scope of the present disclosure or the scope of protection claimed, but are primarily intended to describe the features of specific embodiments of a particular disclosure. certain features described in multiple embodiments in the present disclosure may also be implemented in combination in a single embodiment. On the other hand, the various features described in a single embodiment may also be implemented separately or in any suitable sub-combination in multiple embodiments. Further, although the features may function in some combinations as described above and even initially claimed protection, one or more features from the combination claimed protection may be removed from the combination in some cases, and the combination claimed protection may refer to a sub-combination or a variant of a sub-combination.

Similarly, although the operations are depicted in a particular order in the drawings, this should not be construed as requiring that the operations be performed in the particular order shown or sequentially, or that all of the illustrated operations be performed to achieve the desired result. In some embodiments, multitasking and parallel processing are also possible or may be advantageous. Furthermore, the separation of the various system modules and components in the above embodiments should not be understood to require such separation in all embodiments, and it should be understood that the program components and systems described may often be integrated together in a single software product, or packaged into multiple software products.

Therefore, particular embodiments of the subject matter have been described. Other embodiments are within the scope of the claims. In some cases, the acts or steps in the claims may be performed in a different order than in the embodiments and still achieve the desired result. In addition, the processes depicted in the drawings do not necessarily require the particular sequence or successive sequences shown in order to achieve the desired results. In some embodiments, multitasking and parallel processing are also possible or may be advantageous.

The above description is only preferred examples of the present disclosure, and is not intended to limit the disclosure, and any modifications, equivalents, improvements, etc., which are made within the spirit and principles of the present disclosure, should be included scope of the present disclosure.

## Claims

1. A transfer robot, comprising:
a body having a U-shape and configured to carry one or more objects to a designated location;
a lifting assembly provided in an opening of the body having the U-shape and configured to lift or lower the one or more objects; and
a bottom detection sensor provided on a bottom part of the lifting assembly and configured to collect navigation information from a ground for the body to determine a movement route.

2. The transfer robot of claim 1, wherein the bottom detection sensor is an image sensor.

3. The transfer robot of claim 1, wherein the body comprises driving wheels and a driving module, and the driving module is configured to receive the navigation information and drive the driving wheels to move along the movement route.

4. The transfer robot of claim 1, further comprising a top detection sensor, which is provided on a top part of the lifting assembly and configured to detect a relative position relationship between the lifting assembly and the one or more objects.

5. The transfer robot of claim 4, wherein the top detection sensor is one of an image sensor, an ultrasonic sensor and a photoelectric sensor.

6. The transfer robot of claim 1, further comprising a front-end obstacle avoidance module, which is provided at a front end of the lifting assembly and configured to detect obstacles in front of the transfer robot.

7. The transfer robot of claim 6, wherein
the front-end obstacle avoidance module comprises a non-contact detection sensor which is configured to detect obstacles within a preset range; and/or the front-end obstacle avoidance module comprises a collision protection plate, an elastic reset component, a triggering assembly and a contact detection sensor;
wherein the collision protection plate is connected to the triggering assembly by the elastic reset component, the collision protection plate applies a thrust force to the elastic reset component and the triggering assembly in a collision with an obstacle and completes a reset under an action of the elastic reset component, and the triggering assembly triggers the contact detection sensor to generate a collision signal through the thrust force.

8. The transfer robot of claim 7, wherein the front-end obstacle avoidance module is fixed to the front end of the lifting assembly by a module connecting component, the triggering assembly comprises a guide connection plate and a contact detection sensor triggering plate connected to the guide connection plate, the collision protection plate is connected to the guide connection plate by the elastic reset component, the guide connection plate slides forward and backward by passing through an inner hole of the module connecting component, and the contact detection sensor is fixedly connected to the module connecting component.

9. The transfer robot of claim 1, further comprising a moving part, which is configured to drive the lifting assembly to extend from the opening of the body or retract from an outside of the body into the opening.

10. The transfer robot of claim 9, further comprising a slide rail assembly, which is provided between the body and the lifting assembly, and configured to guide the moving part to drive the lifting assembly to extend from or retract into the opening of the body.

11. The transfer robot of claim 1, further comprising an object protection unit, which is provided on a top part of the body and configured to limit the one or more objects carried by the body, wherein edges of the object protection unit not corresponding to the opening of the body have fences, or all edges of the object protection unit have fences, and an fence at an edge of the object protection unit corresponding to the opening of the body are lower than fences at other edges of the object protection unit.
